(19) Europäisches Patentamt / European Patent Office / Office européen des brevets

(11) **EP 2 790 348 B1**

## (12) EUROPEAN PATENT SPECIFICATION

(45) Date of publication and mention
of the grant of the patent:
**15.01.2020   Bulletin 2020/03**

(51) Int Cl.:
***H04L 5/00*** *(2006.01)*        ***H04L 25/02*** *(2006.01)*

(21) Application number: **13179039.6**

(22) Date of filing: **02.08.2013**

(54) **Method of channel estimation by phase rotation in an Orthogonal Frequency Division Multiplexing (OFDM) System**

Verfahren zur Kanalschätzung durch Phasendrehung in einem orthogonalen Frequenzmultiplexsystem (OFDM)

Procédé d'estimation de canal par rotation de phase dans un système de multiplexage par répartition orthogonale de la fréquence (OFDM)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2013   CN 201310121784**
**20.06.2013   PCT/CN2013/077556**

(43) Date of publication of application:
**15.10.2014   Bulletin 2014/42**

(73) Proprietor: **Spreadtrum Communications (Shanghai) Co., Ltd.**
**Shanghai 201203 (CN)**

(72) Inventors:
 • **Shen, Xuqiang**
   **Pudong New Area Shanghai 201203 (CN)**
 • **Cao, Qiang**
   **Pudong New Area Shanghai 201203 (CN)**
 • **Dong, Xiaojian**
   **Pudong New Area Shanghai 201203 (CN)**

(74) Representative: **Loyer & Abello**
**9, rue Anatole de la Forge**
**75017 Paris (FR)**

(56) References cited:
   **CN-A- 1 708 142          CN-A- 101 383 793**
   **CN-B- 101 325 568        US-A1- 2005 105 461**
   **US-A1- 2010 296 438      US-B1- 6 768 714**

 • **DO HYUN PARK ET AL: "Channel estimation with pilot signal design for terrestrial UDTV using MISO technology", CONSUMER ELECTRONICS (ICCE), 2012 IEEE INTERNATIONAL CONFERENCE ON, IEEE, 13 January 2012 (2012-01-13), pages 207-208, XP032124855, DOI: 10.1109/ICCE.2012.6161831 ISBN: 978-1-4577-0230-3**

## Description

In general communication systems, signal transmission in wireless channel presents channel characteristics such as multipath information, doppler frequency shift, and phase rotation of received data. Therefore, when a receiver receives a signal, it estimates and uses current channel information to equalize the received data and restore the sent data.

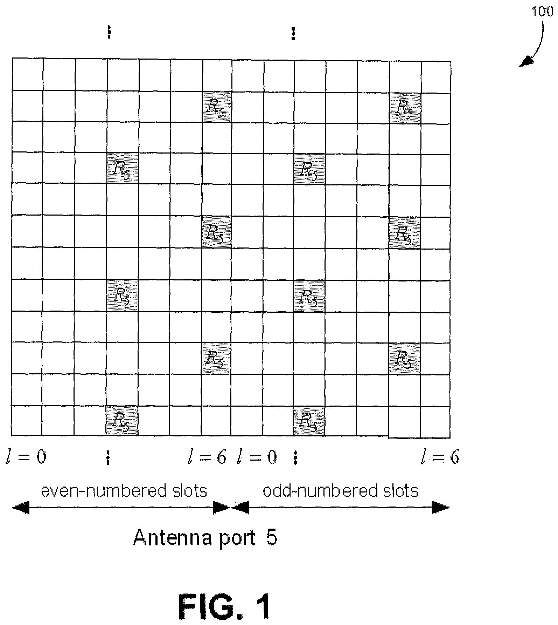

In an orthogonal frequency division multiplexing (OFDM) system, some pilot sequences known to the receiver are transmitted on a time-frequency domain at intervals. For example, as shown in **FIG. 1**, the Long Term Evolution (LTE) system is provided with spaced pilot sequences, by which the receiver can restore channels on subcarriers and perform smoothing on the time-frequency domain so as to obtain channel estimation results on the whole time-frequency domain by common methods such as the Wiener filtering method, the simple linear interpolation method or FFT method with time-frequency domain transformation.

However, in the LTE system, beam forming of smart antennas may cause discontinuous phases among subbands of the OFDM in transmission modes 7 or 8. Therefore, in the sitatuation of smoothing among subbands, the channel estimation error can be significant and the subhands may become narrow. For example, in the LTE channel, a resource block generally presents a discontinuous channel (in LTE, one resource block includes 12 subcarriers, and there are 3 or 4 UE-RS pilot frequencies thereon); in the sitation of smoothing by a traditional filter in the resource block, the error may also be significant due to the edge effect of the filter.

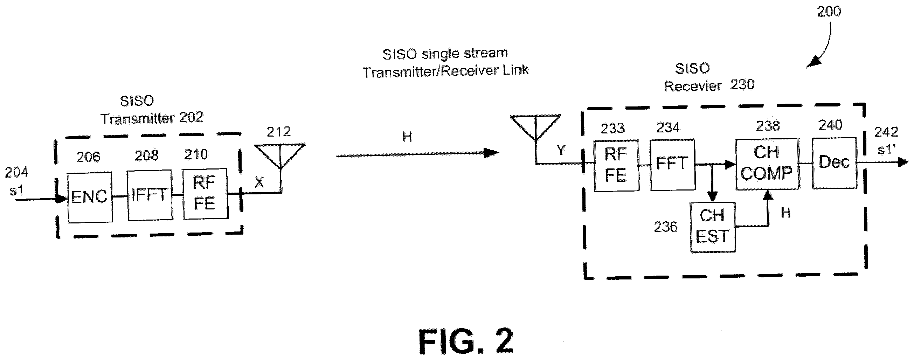

In an OFDM receiver, channel smoothing is performed on the estimated channel in order to reduce the effects of noise on the estimated channel, thereby improving the system packet error performance. **FIG. 2** illustrates a single stream OFDM transmitter 202 accepting an input stream s1 204 to a baseband encoder 206 which encoded stream is provided to an inverse fast Fourier transform (IFFT) 208 to produce a plurality of baseband subcarriers such as 2 through 2024 or 2 through 512, and the subcarriers are modulated to a carrier frequency for coupling to an antenna 212 as transmitted signal X. The transmitted signal X is coupled through a channel with a frequency dependent characteristic H to receive antenna 232 of receiver 230 to form received signal Y=HX. The receiver 230 receives signal Y, which is baseband converted using RF Front End 233 and applied to FFT 234 to channel compensator 238 and to decoder 240 which generates the received stream S1'. Channel estimator 236 estimates the channel characteristic H during a long preamble interval, and the channel characteristic H is applied to channel compensator 238.

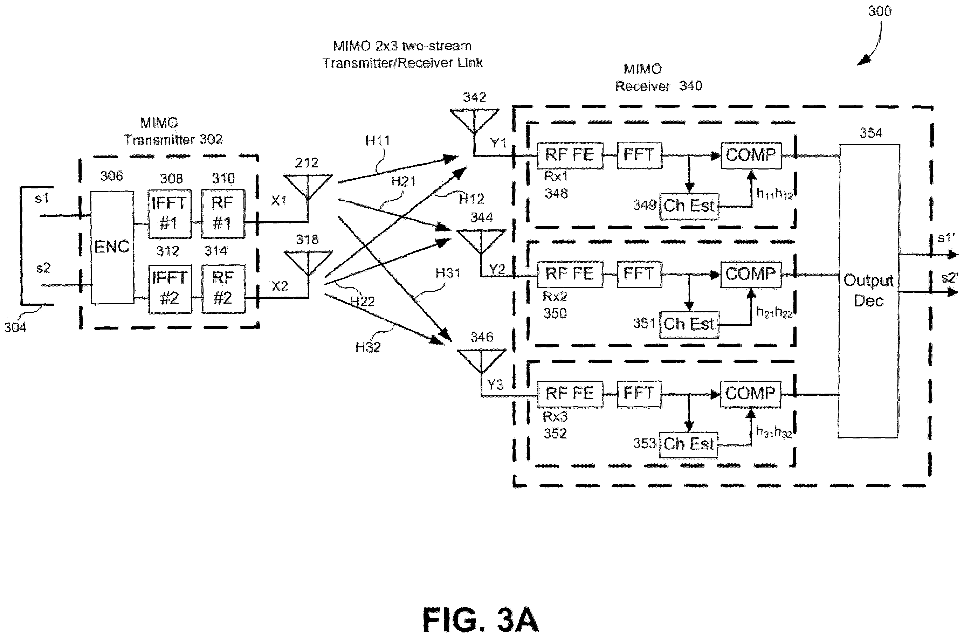

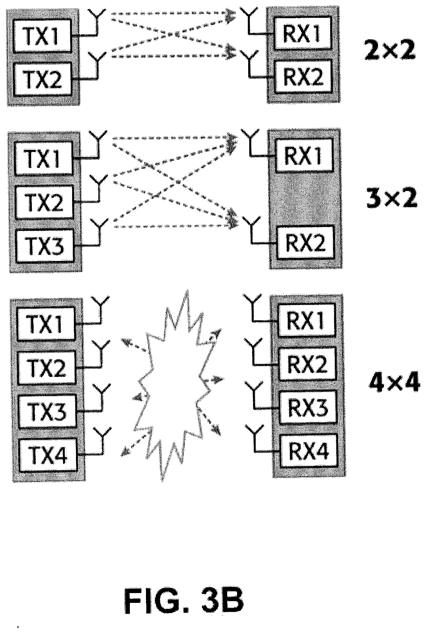

**FIG. 3A** illustrates a Multiple Input Multiple Output (MIMO) receiver 340 operative on two transmit streams s1 and s2 304 encoded 306 and provided to first stream IFFT 308 which generates baseband subcarriers, which are provided to RF modulator and amplifier 310 and coupled as X1 to antenna 316. Second stream IFFT 312 and RF modulator and amplifier 314 similarly generate subcarriers which are upconverted and coupled to antenna 318 as X2. Receiver 340 has three antennas 342, 344, 346, which couple to receivers 348, 350, 352 and to output decoder 354 which forms decoded streams s1' and s2'. Each receiver 348, 350, 352 performs the receive functions as described for FIG. 2, however the channel estimation function 349, 351, 353 for each receiver uses the long preamble part of the packet to characterize the channel from each transmit antenna 316, 318 to each receive antenna 342, 344, 346. For example, receiver 348 must characterize and compensate the channel h11 from 316 to 342 as well as channel h12 from 318 to 342. Each channel characteristic h11 and h22 is a linear array containing real and imaginary components for each subcarrier, typically 1 through 1024. The channel estimator 349 therefore contains h11 and h12, estimator 351 contains h21 and h22, and channel estimator 353 contains h31 and h32. The 2.times.3 MIMO case of FIG. 3 shows the case where the number of remote transmitters Nt=2 and the number of local antennas and receivers Nr=3. For a MIMO receiver where the number of remote transmitters is Nt and the number of local antennas and receivers is Nr, the Nt*Nr channels have a frequency response which may be smoothed over a range of subcarrier frequencies using a finite impulse response (FIR) filter for I and Q channels. Such a channel smoothing filter would require a total of 2*Nt*Nr filters. For a 13 tap FIR filter, each tap would have an associated multiplier, so such an implementation would require 13 complex multipliers for each filter, or 26*Nt*Nr multipliers total at each receiver station.

It is to be appreciated that communicaiton interfaces can have other MIMO configurations. **FIG. 3B** is a simplified diagram illustrating various types of MIMO configuration.

Accordingly, due to channel discontinuity, the smoothing processing will result in a significant errors in the channel estimation results. These errors affecting the performance, and signal quality. Thus, a method for obtaining more accurate channel estimation results is needed.

An aspect of the invention relates to a method as defined in claim 1.

Preferred and optional features are defined in the dependent claims.

A further understanding of the nature and advantages of the present invention may be realized by reference to the remaining portions of the specification and the drawings, wherein like reference numerals are used throughout the several drawings to refer to similar components and preferred embodiments are described by way of example only. In some instances, a sub-label is associated with a reference numeral to denote one of multiple similar components. When reference is made to a reference numeral without specification to an existing sub-label, it is intended to refer to all such multiple similar components.

**FIG. 1** illustrates a Long Term Evolution (LTE) system which is provided with spaced pilot sequences.

**FIG. 2** illustrates a single stream OFDM transmitter.

**FIG. 3A** illustrates a Multiple Input Multiple Output (MIMO) receiver.

**FIG. 3B** is a simplified diagram illustrating various types of MIMO configuration.

**FIGS. 4A** and **4B** illustrate a flow diagram for processing communication signals, according to one embodiment of the invention.

**FIG. 5** illustrates a flow diagram for processing communication signals, according to another embodiment of the invention.

**FIG. 6** illustrates waveform diagrams, according to one embodiment of the invention.

**FIG. 7** illustrates a block diagram of an exemplary computer hardware system that may be used to implement various embodiments.

In the following description, for the purposes of explanation, numerous specific details are set forth in order to provide a thorough understanding of various embodiments of the present invention. It will be apparent, however, to one skilled in the art that embodiments of the present invention may be practiced without some of these specific details. In other instances, well-known structures and devices are shown in block diagram form.

The ensuing description provides exemplary embodiments only, and is not intended to limit the scope of the claims. Rather, the ensuing description of the exemplary embodiments will provide those skilled in the art with an enabling description for implementing an exemplary embodiment. It should be understood that various changes may be made in the function and arrangement of elements without departing from the scope of the invention as set forth in the appended claims.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Aspects of the present invetnion relate to the use of the pilot signals within each resource blocks to determine the phase, and adjust the phase of each resource block in order to get a continuous wave. Then, smoothing is performed on the continuous wave, and then the origninal waveform is restored.

A further aspect of the present invention includes obtaining an acerage of channel information in a subband by calculating the average value of the pilot frequency descrambled in the subband. Then, obtaining channel estimation results according to phase difference among the subcarriers in the subband, average value of the channel and phase rotation. The method can be used to obtain better channel estimation result in a small subband and also overcomes the traditionally significant channel estimation error due to discontinuous phases.

Further, phase differences of a subcarrier interval can be obtained directly by the pilot frequency. The phase differences among pilot frequencies are normalized to one subcarrier by distance and averaged. Channel estimation results obtained by the phase rotation can also be obtained by pilot frequency rotation.

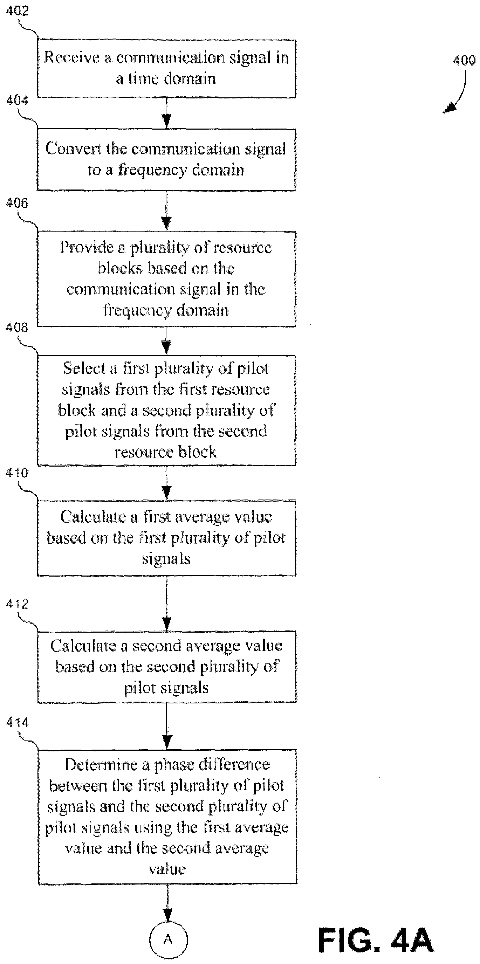

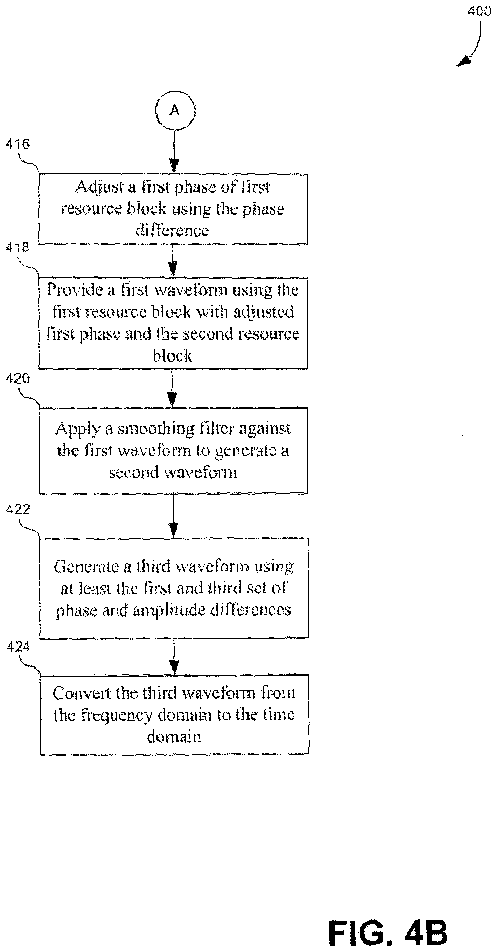

**FIGS. 4A** and **4B** illustrate a method 400 for performing processing of communication signals, according to one embodiment of the invention. At process block 402 a communication signal in a time domain is received. The communication signal to a frequency domain is converted (process block 404). At process block 406, a plurality of resource blocks based on the communication signal in the frequency domain are provided. In one embodiment, the plurality of resource blocks including a first resource block and a second resource block.

At process block 408, a first plurality of pilot signals from the first resource block and a second plurality of pilot signals from the second resource block are selected. A first average value based on the first plurality of pilot signals is then calculated (process block 410). A second average value based on the second plurality of pilot signals is also calculated (process block 412).

At process block 414, a phase difference between the first plurality of pilot signals and the second plurality of pilot signals using the first average value and the second average value is determined. At point the method 400 continues to **FIG. 4B** at point A. Then, at process block 416, a first phase of first resource block using the phase difference is adjusted.

At process block 418, a first waveform using the first resource block with adjusted first phase and the second resource block is provided. Then, a smoothing filter against the first waveform to generate a second waveform is applied (process block 420). In one embodiment, a Weiner filter, a discrete Fourier Transform or an inverse discrete Fourier Transform may be used. At process block 422, a third waveform using at least the first and third set of phase and amplitude differences is generated. Then, the third waveform from the frequency domain to the time domain is converted (process block 424).

Furthermore, a number of pilot signals to use may be selected as well as a fourth waveform on the edge of the second resource block may also be selected. Method 400 also calculates a phase average the first and second resource blocks, adjusts the phase of the first resource block, and adjusts the phase of the second resource block.

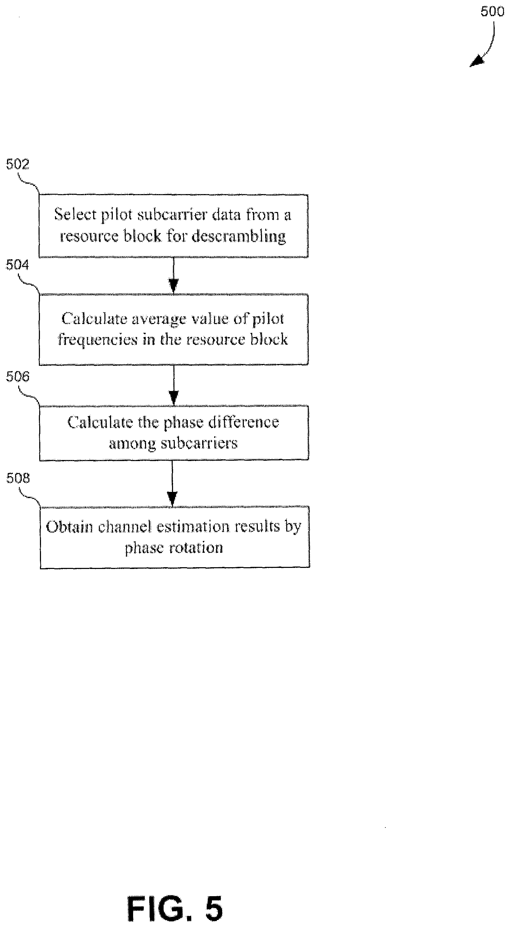

Turning now to **FIG. 5** which illustrates a method 500 for performing processing of communication signals, according to a further embodiment of the invention. According to **FIG. 1**, pilot frequencies from a subband (such as one RB) in an OFDM symbol are selected, and set it as $Plot_i$, i=0,1,2,..N-1 (process block 502). Then, average value of pilot frequencies as

$$Ave = \frac{1}{N} \sum_{i=0}^{N-1} Plot_i$$

is set, and a phase of Ave as Phase_Ave is also set (process block 504).

**The** phase of each pilot frequency and set it as $Phase_{Plot_i}$ is calculated (process block 506). distance between the subcarrier corresponding to each pilot frequency and averaging intermediate subcarrier as $Dist_i$ as shown in Figure -4,0,4 is set, and the phase difference between each pilot frequency and Ave and normalize the difference to one subcarrier is calculated, and set as: $PhasePerSubcarr_\downarrow i = (Ave \mid |Phase_|Plot|_i )/Dist_i$, do not calculate $PhasePerSubcarr_i$ if $Dist_i$ is 0.

The average value in the subband and set it as AvePhasePreSubCar is solved, the channel estimation results of all subcarriers in the subband is calculated, and set as $R_m$ by calculating the distance between the current subcarrier and the subcarrier corresponding to average value Ave; m=0,1,M-1, where M is number of subcarriers in the subband; calculate phase difference as AvePhasePreSubCar$\times R_m$. Then, the channel estimation result by Ave phase rotation AvePhasePreSubCar$\times R_m$ is obtained (process block 508).

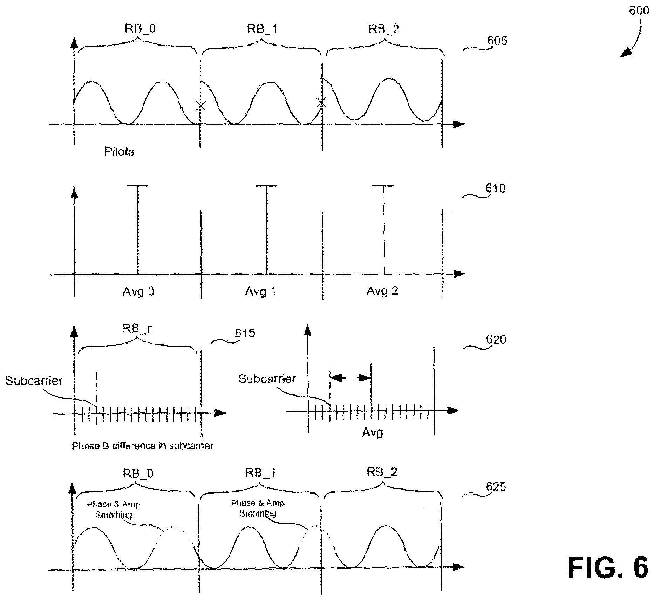

Turning now to **FIG. 6** which illustrates multiple waveforms in accordance with embodiments of the present invention. Graph 605 shows the original waveform with resource block RB_0, RB_1, RB_2. Then, graph 610 shows smoothing within the RBs by smoothing the amplitudes. Graph 615 shows smoothing the phase within the RBs, and graph 620 shows obtaining the avg. Finally, graph 625 shows restoring the waveform back to the original waveform after smoothing occurs.

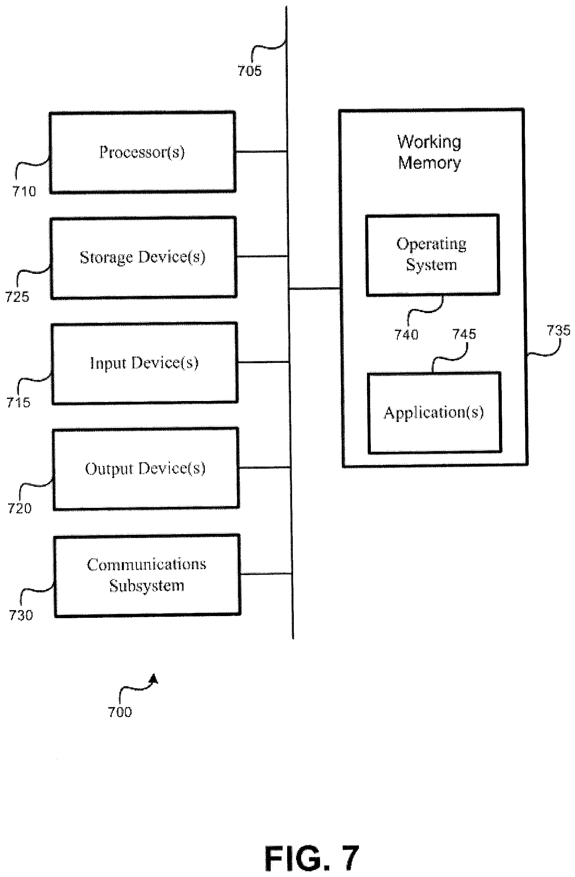

**FIG. 7** illustrates a block diagram of an exemplary computer system 700 that may be used to implement various embodiments. Some embodiments may employ a computer system (such as the computer system 700) to perform methods in accordance with various embodiments of the invention. The computer system may be implemented using various circuits, microchips, and connections within a mobile device. According to a set of embodiments, some or all of the procedures of such methods are performed by the computer system 700 in response to processor 710 executing one or more sequences of one or more instructions (which might be incorporated into the operating system 740 and/or other code, such as an application program 745) contained in the working memory 735. Such instructions may be read into the working memory 735 from another computer-readable medium, such as one or more of the storage device(s) 725. Merely by way of example, execution of the sequences of instructions contained in the working memory 735 might cause the processor(s) 710 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 700, various computer-readable media might be involved in providing instructions/code to processor(s) 710 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 725. Volatile media include, without limitation, dynamic memory, such as the working memory 735.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 710 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 700.

The communications subsystem 730 (and/or components thereof) generally will receive signals, and the bus 705 then might carry the signals (and/or the data, instructions, etc. carried by the signals) to the working memory 735, from which the processor(s) 710 retrieves and executes the instructions. The instructions received by the working memory 735 may optionally be stored on a non-transitory storage device 725 either before or after execution by the processor(s) 710.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope of the claims. Rather, the preceding description of the configurations will provide those skilled in the art with an enabling description for implementing described techniques. Various changes may be made in the function and arrangement of elements without departing from the scope of the claims.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the scope of the claims. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

## Claims

1. A method of processing communication signals, the method comprising:

   selecting and descrambling pilot subcarriers $Plot_i$ from N (N> 1) subbands, and performing the following steps to each of the subbands;
   calculating an arithmetic mean value of the descrambled pilot subcarriers in the subband and selecting the arithmetic mean value as an average channel value of an intermediate subcarrier $Ave$ in the subband;
   calculating a phase $Phase_{Ave}$ of the intermediate subcarrier based on the average channel value;
   for each pilot subcarrier $Plot_i$ of the subband:

   - calculating a phase $Phase_{Plot\_i}$,
   - calculating a distance $Dist_i$ between the pilot subcarrier $Plot_i$ and the intermediate subcarrier $Ave$;
   - calculating a normalized phase difference $PhasePerSubcarr_i$ by subtracting the phase $Phase_{Plot\_i}$ of the pilot subcarrier $Plot_i$ from the phase $Phase_{Ave}$ of the intermediate subcarrier $Ave$, and then dividing by the distance $Dist_i$ between the intermediate subcarrier $Ave$ and the pilot subcarrier $Plot_i$, such that $PhasePerSubcarr_i= (Phase_{Ave} - Phase_{Plot\_i})/ Dist_i$,
   averaging the normalized phase differences $PhasePerSubcarr_i$ to obtain an averaged normalized phase difference $AvePhasePerSubCar$;

   for each subcarrier m of the subband, calculating a channel estimation result $R_m$ by:

   - calculating a distance between the subcarrier m and the intermediate subcarrier, wherein a channel estimation result of the intermediate subcarrier is known ,

- calculating a phase rotation **AvePhasePerSubCar x R$_m$** as a function of the averaged normalized phase difference **AvePhasePerSubCar** and of the distance between the subcarrier m and the intermediate subcarrier,

- obtaining the channel estimation result **R$_m$** as a function of the subcarrier m by applying the phase rotation **AvePhasePerSubCar x R$_m$** to the channel estimation result of the intermediate subcarrier.

2. The method of claim 1, wherein channels among N subcarriers are discontinuous.

3. The method of claim 1, wherein the communication signal comprises an Orthogonal Frequency Division Multiplexing (OFDM) Signal.

4. The method of claim 1, wherein the communication signal is received via Long Term Evolution (LTE) communication network.

**Patentansprüche**

1. Verfahren zur Weiterverarbeitung von Kommunikationssignalen, umfassend:

Auswählen und Entschlüsseln von Pilotunterträgern **Plot$_i$** aus N-(N>1)-Teilbändern und Durchführen der folgenden Schritte für jedes der Teilbänder;

Berechnen eines arithmetischen Mittelwertes der entschlüsselten Pilotunterträger im Teilband und Auswählen des arithmetischen Mittelwertes als einen Kanalmittelwert eines Zwischenunterträgers **Ave** im Teilband;

Berechnen einer Phase **Phase$_{Ave}$** des Zwischenunterträgers basierend auf dem Kanalmittelwert;

für jeden Pilotunterträger **Plot$_i$** des Teilbandes:

- Berechnen einer Phase **Phase$_{Plot\_i}$**,
- Berechnen einer Distanz **Dist$_i$** zwischen dem Pilotunterträger **Plot$_i$** und dem Zwischenunterträger **Ave**;
- Berechnen einer normierten Phasendifferenz **PhasePerSubcarr$_i$** durch Subtrahieren der Phase **Phase$_{Plot\_i}$** des Pilotunterträgers **Plot$_i$** von der Phase **Phase$_{Ave}$** des Zwischenunterträgers **Ave**, und danach Dividieren durch die Distanz **Dist$_i$** zwischen dem Zwischenunterträger **Ave** und dem Pilotunterträger **Plot$_i$**, so dass **PhasePerSubcarr$_i$= (Phase$_{Ave}$ - Phase$_{Plot\_i}$)/Dist$_i$**, Mittelung der normierten Phasendifferenzen **PhasePerSubcarr$_i$**, um eine gemittelte normierte Phasendifferenz **AvePhasePerSubCar** zu erhalten;

für jeden Unterträger m des Teilbandes, Berechnen eines Kanalschätzungsergebnisses **R$_m$** durch:

- Berechnen einer Distanz zwischen dem Unterträger m und dem Zwischenunterträger, wobei ein Kanalschätzungsergebnis des Zwischenunterträgers bekannt ist,
- Berechnen einer Phasendrehung **AvePhasePerSubCar x R$_m$** als eine Funktion der gemittelten normierten Phasendifferenz **AvePhasePerSubCar** und der Distanz zwischen dem Unterträger m und dem Zwischenunterträger,

Erhalten des Kanalschätzungsergebnisses **R$_m$** als eine Funktion des Unterträgers m durch Anwenden der Phasendrehung **AvePhasePerSubCar x R$_m$** auf das Kanalschätzungsergebnis des Zwischenunterträgers.

2. Verfahren gemäß Anspruch 1, wobei Kanäle zwischen N-Unterträgern diskontinuierlich sind.

3. Verfahren gemäß Anspruch 2, wobei das Kommunikationssignal ein Orthogonales Frequenzmultiplex (OFDM)-Signal umfasst.

4. Verfahren gemäß Anspruch 1, wobei das Kommunikationssignal über ein "Long Term Evolution"-(LTE)-Kommunikationsnetzwerk empfangen wird.

**Revendications**

1. Procédé de traitement de signaux de communication, le procédé comprenant :

la sélection et le désembrouillage de sous-porteuses pilotes **Plot$_i$** à partir de N (N>1) sous-bandes, et la réalisation des étapes suivantes sur chacune des sous-bandes ;

le calcul d'une valeur moyenne arithmétique des sous-porteuses pilotes désembrouillées dans la sous-bande et la sélection de la valeur moyenne arithmétique en tant que valeur de canal moyenne d'une sous-porteuse intermédiaire **Ave** dans la sous-bande ;

le calcul d'une phase **Phase$_{Ave}$** dans la sous-porteuse intermédiaire sur la base de la valeur de canal moyenne ;

pour chaque porteuse pilote **Plot$_i$** de la sous-bande :

- le calcul d'une phase $\text{Phase}_{\text{Plot\_i}}$,
- le calcul d'une distance $\text{Dist}_i$ entre la sous-porteuse pilote $\text{Plot}_i$ et la sous-porteuse intermédiaire **Ave** ;
- le calcul d'une différence de phase normalisée $\text{PhasePerSubcarr}_i$ en soustrayant la phase $\text{Phase}_{\text{Plot\_i}}$ de la sous-porteuse pilote $\text{Plot}_i$ de la phase $\text{Phase}_{\text{Ave}}$ de la sous-porteuse intermédiaire **Ave**, puis en divisant par la distance $\text{Dist}_i$ entre la sous-porteuse intermédiaire **Ave** et la sous-porteuse pilote $\text{Plot}_i$, de telle sorte que $\text{PhasePerSubcarr}_i = (\text{Phase}_{\text{Ave}} - \text{PhasePlot\_i})/\text{Dist}_i$, la moyenne des différences de phase normalisées $\text{PhasePerSubcarr}_i$ pour obtenir une différence de phase normalisée moyenne **AvePhasePerSubCar** ;

pour chaque sous-porteuse m de la sous-bande, le calcul d'un résultat d'estimation de canal **Rm** en :

- calculant une distance entre la sous-porteuse m et la sous-porteuse intermédiaire, dans lequel un résultat d'estimation de canal de la sous-porteuse intermédiaire est connu,
- calculant une rotation de phase **AvePhasePerSubCar x Rm** en tant que fonction de la différence de phase normalisée moyenne **AvePhasePerSubCar** et de la distance entre la sous-porteuse m et la sous-porteuse intermédiaire,
- obtenant le résultat d'estimation de canal **Rm** en fonction de la sous-porteuse m en appliquant la rotation de phase **AvePhasePerSubCar x Rm** au résultat d'estimation de canal de la sous-porteuse intermédiaire.

2. Procédé selon la revendication 1, dans lequel des canaux parmi N sous-porteuses sont discontinus.

3. Procédé selon la revendication 1, dans lequel le signal de communication comprend un signal de multiplexage par répartition orthogonale de la fréquence (OFDM).

4. Procédé selon la revendication 1, dans lequel le signal de communication est reçu via un réseau de communication à évolution à long terme (LTE).

FIG. 1

**FIG. 2**

EP 2 790 348 B1

FIG. 3A

**FIG. 3B**

402

Receive a communication signal in
a time domain

404

Convert the communication signal
to a frequency domain

406

Provide a plurality of resource
blocks based on the
communication signal in the
frequency domain

408

Select a first plurality of pilot
signals from the first resource
block and a second plurality of
pilot signals from the second
resource block

410

Calculate a first average value
based on the first plurality of pilot
signals

412

Calculate a second average value
based on the second plurality of
pilot signals

414

Determine a phase difference
between the first plurality of pilot
signals and the second plurality of
pilot signals using the first average
value and the second average
value

A

400

## FIG. 4A

400

A

416

Adjust a first phase of first resource block using the phase difference

418

Provide a first waveform using the first resource block with adjusted first phase and the second resource block

420

Apply a smoothing filter against the first waveform to generate a second waveform

422

Generate a third waveform using at least the first and third set of phase and amplitude differences

424

Convert the third waveform from the frequency domain to the time domain

# FIG. 4B

500

502

Select pilot subcarrier data from a
resource block for descrambling

504

Calculate average value of pilot
frequencies in the resource block

506

Calculate the phase difference
among subcarriers

508

Obtain channel estimation results by
phase rotation

# FIG. 5

FIG. 6

**FIG. 7**